Europäisches Patentamt

European Patent Office

Office européen des brevets

(11) Publication number: **0 231 074 B1**

(12) **EUROPEAN PATENT SPECIFICATION**

(45) Date of publication of patent specification: **19.11.92** (51) Int. Cl.⁵: **G01L 9/10**, G01L 19/12

(21) Application number: **87300283.6**

(22) Date of filing: **14.01.87**

The file contains technical information submitted after the application was filed and not included in this specification

(54) **Lubrication pressure sensor apparatus.**

(30) Priority: **14.01.86 US 818836**

(43) Date of publication of application:
**05.08.87 Bulletin 87/32**

(45) Publication of the grant of the patent:
**19.11.92 Bulletin 92/47**

(84) Designated Contracting States:
**DE FR GB IT NL SE**

(56) References cited:
**DE-A- 2 640 529**
**FR-A- 2 140 863**

**MACHINE DESIGN, vol. 36, no. 17, 16th July 1964, page 143; "Rolling magnet indicates pressure differential"**

**DESIGN ENGINEERING, November 1985, page 66, London, GB; "Magnetic coupling increases pressure indicator reliability"**

(73) Proprietor: **TEXAS INSTRUMENTS INCORPO-RATED**
**13500 North Central Expressway**
**Dallas Texas 75265(US)**

(72) Inventor: **Strasser, Werner**
**1888 Barksdale Drive**
**Lexington Kentucky 40503(US)**

(74) Representative: **Abbott, David John et al**
**Abel & Imray Northumberland House 303-306**
**High Holborn**
**London, WC1V 7LH(GB)**

Rank Xerox (UK) Business Services

## Description

This invention relates generally to pressure sensing apparatus and more particularly to apparatus for sensing the pressure differential between two pressure sources.

In relatively large sealed piston type refrigerant compressors, for example in the order of five ton compressors, it is conventional to monitor lubrication pressure generated by an oil pump in order to prevent compressor operation when there is insufficient lubrication which would result in undue wear and even seizing up of the compressor.

Conventionally lubrication pressure is monitored by using a pair of bellows type gauge pressure sensors. One sensor is connected to the crankcase through a thin capillary tube while the other sensor is connected through such a tube to an output port of the oil pump. The two sensors are typically mechanically linked by means of a balanced beam. The balance can be changed by means of coil springs which are adjustable to yield imbalance if relative oil pressure value drops below a desired value.

Crankcase pressures vary and pulsate over a wide range dependent on temperature and type of thermal loading of the refrigeration system. The pressures also fluctuate with each reciprocation of each cylinder and with the movement of each lobe or tooth of the oil pump (e.g. 120 Hz). The dampening effect of the capillary tubes in combination with the relatively high mass of the sensors and linkage elements as well as mechanical friction causes this type of system to filter these variations rapidly, changing pressure fluctuations which would cause excessive wear of sensor components or premature indication of oil pressure loss. However, not only does mechanical vibration cause a high incident of capillary tube fracture, sensors of this type inherently have a high material content due to the relatively high forces to which they are subjected. That is, such sensors measuring gauge pressure are exposed to atmospheric pressure and need to be able to prevent freon leakage.

It has been proposed to locate a sensor within the oil pump housing itself to eliminate the need for external plumbing. For example, in. U.S. Patent No. 4,551,069 a piston is shown disposed in a tube separating the interior of the tube into a high pressure portion which communicates with the output of the oil pump and a law pressure portion which communicates with the suction of the oil pump. The piston is adapted to move into and out of engagement with a movable contact arm of a switch. However this arrangement results in excessive wear of the movable sensor parts due to the continuous movement of the piston with the cyclical pressure fluctuations mentioned above as well as the need for some other means to prevent nuisance tripping of the compressor motor if it is used to control the energization thereof as suggested in the patent. Further, the provision of switching electric current in an oil and freon environment is undesirable.

In an article entitled "Magnetic coupling increases pressure indicator reliability" on page 66 of the November 1985 issue of "Design Engineering" published in London, there is described a differential pressure indicator having a spring loaded piston subjected to the pressures to be compared on opposite faces. The piston is cup-shaped having a rim that forms a sliding seal with the cylinder wall with the rest of the cylindrical part of the piston spaced from the cylinder wall. The piston is stepped, having a cylindrical projection from the base that extends coaxially with the cylinder and fits into a cylindrical extension of the cylinder. One pressure inlet is via a ball valve surge damper into the side of the cylinder wall to apply pressure to the outside of the cup-shaped piston and the other pressure inlet is through an axial pipe to the inside of the piston. The indicator is coupled magnetically to a magnet in the cylindrical projection of the piston, the magnetic coupling being insufficient for the indicator button to follow the rapid movement of the piston during a transient.

It is therefore an object of the present invention to provide a lubrication sensor which can indicate the differential pressure between pressure generated by an oil pump and that contained in a compressor crankcase which is inexpensive, long lasting and reliable. It is another object of the invention to provide a sensor which can give either an analog output of the quantitative level of the differential or an indication of the existence or nonexistence of sufficient pressure differential as an indication of the efficacy of lubrication. Yet another object is the provision of means to vary the amount of dampening effected in the sensor.

The above and other objects, features and advantages of the present invention will become apparent from the following description and the appended claims, taken in conjunction with the accompanying drawings which show by way of example preferred embodiments of the present invention and in which like component parts are designated by like reference numerals throughout the several figures.

According to the present invention there is provided apparatus for sensing a fluid pressure differential between a first and a second port, the apparatus comprising a housing having a cylindrical bore extending from a first, open end to a second, closed end, a shuttle slidably received in the bore and having a part fitting the bore like a seal at the end of the shuttle nearer the first end of the bore, a pressure receiving surface and an element of magnetic material, means for biasing the shuttle towards the second end of the bore, and means responsive to the element of magnetic material to provide an indication of the position of the shuttle in the bore, the first port being connected to the first end of the bore and the second port being connected to a middle region of the bore so that the pressure receiving surface receives the pressure at the first port on one face and the pressure at the second port on the other face, characterised in that the shuttle has a stepped generally cylindrical portion between the middle region opposite the second port and the pressure receiving surface, the stepped generally cylindrical portion being partly of larger cross-section so as to define part of a passage between the shuttle and the wall of the cylindrical bore for fluid to flow from the second port to the pressure receiving surface, that part of the passage having selected length and cross-section so as to provide damping of the movement of the shuttle in response to fluid pressure.

In one example of the invention, a first port at a first end thereof and a second port spaced axially from the first port. The probe is receivable in a threaded well of the oil pump housing with the lower end of the probe projecting into the crankcase of the compressor with the first port in communication therewith. The second port, radially located in the wall defining the bore, is connected to the output of the oil pump. A shuttle is slidably received in the bore with a coil spring disposed between the shuttle and a combination stop and sealing surface formed at the first end of the bore. The spring places a bias on the shuttle tending to move it away from the first end. A second stop is formed at the opposite end of the bore to limit movement of the shuttle in that direction and to ensure that the second port is never blocked.

According to a feature of the invention a piston is integrally attached to the shuttle at its distal end. The force receiving surface of the piston is formed of first and second portions. When the piston is fully seated against the second Stop, only the first portion is exposed to the high pressure oil but as soon as the piston moves away from the, stop, both the first and second portions are exposed to the high pressure oil to greatly increase the force tending to move the shuttle toward the first stop.

According to another feature of the invention a passage having a selected length and cross sectional area is formed between the second port and the force receiving surface of the piston so that a certain period of time is required for oil to flow between the second port and the force receiving surface of the piston. Several cross sectional configurations are described to provide different levels of dampening.

According to a feature of the invention indication means responsive to the position of the shuttle are attached to the probe to provide an indication of the differential pressure existing between the two ports and if desired, to control the energization of the compressor motor. In one embodiment a permanent magnet is formed adjacent the distal end of the piston and a reed switch is mounted on the probe adjacent to the second end of the bore.

When the oil pump is generating more pressure than the combination of the effective pressure of the crankcase oil and the coil spring, the shuttle will move toward the first end with the lower surface of the shuttle contacting the first stop and effectively closing the first port. In this position the magnet is in its lower most position and the normally closed reed switch is closed indicating normal lubricating function.

When the differential pressure between the ports decreases to a point below the calibrated level (calibrated through the relative force receiving areas on opposite sides of the shuttle and the spring rate of the coil spring) then the shuttle will move away from the first end and the magnet will move to a position to cause the reed switch to open to deenergize a circuit indicating a loss of lubricating function.

In another embodiment the portion of the piston adjacent its distal end is formed of material having high magnetic permeability and a coil having an intermediate tap is wound about the probe adjacent the second end of the bore. The outer portion of the coil is connected to a voltage source and the inner portion is connected to voltage responsive means so that as the shuttle moves between its stops, an analog signal will be produced representative of the differential pressure existing between the two ports.

Brief Description of the Drawings

In the accompanying drawings;
Fig. 1 is a cross sectional view taken through the longitudinal axis of the probe mounted in the well of an oil pump housing;
Fig. 1a is a cross sectional view taken through the longitudinal axis of a modified combination shuttle-piston useful in the Fig. 1 sensor;
Fig. 2 is a cross sectional view taken on line 2-2 of Fig. 1 showing the reed switch and the piston of the sensor;
Fig. 2a is similar to Fig. 2 without the reed switch and showing a modification of the piston configuration;
Fig. 2b is similar to Fig. 2a showing a further modification of the piston configuration;
Fig. 3 is a perspective view, partly broken away, of the piston and second end of the bore in which the piston is disposed;

Fig. 4 is an elevational view, partly in cross section, of the second end of a second embodiment of the probe; and

Fig. 5 is a graph of voltage output versus differential pressure for the Fig. 4 embodiment.

Detailed Description

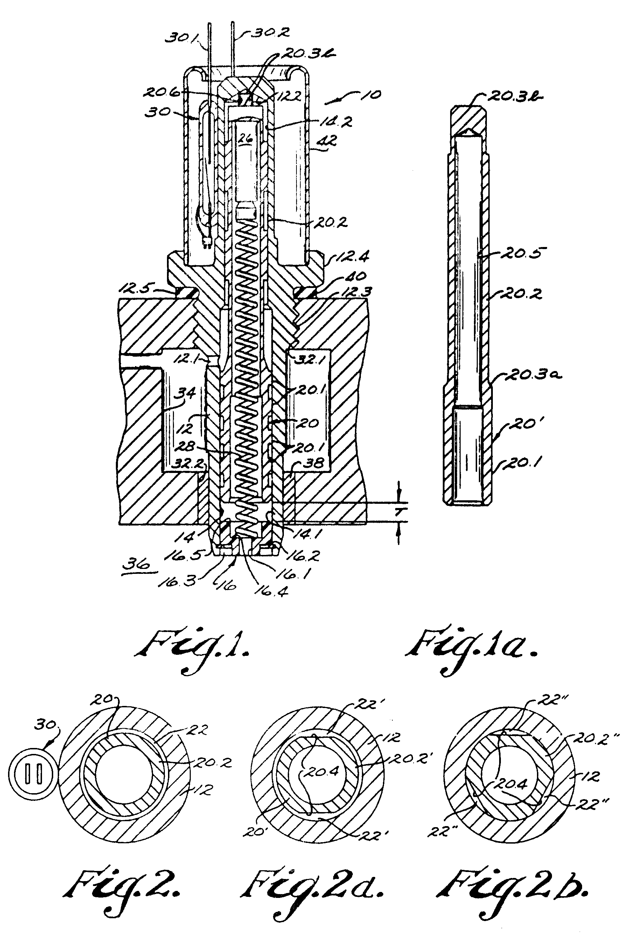

With particular reference to Figs. 1-3 numeral 10 is used to designate generally a sensor probe made in accordance with the invention which comprises an elongated, generally cylindrical housing 12 formed of non-magnetic material such as free cutting naval brass formed with a bore 14 extending essentially from bottom to top. Bore 14 has a large diameter portion 14.1 at its bottom. Bore 14 is closed at its bottom by a plug 16 which is provided with a first port 16.1 extending through the plug and preferably aligned with the longitudinal axis of bore 14. Plug 16 is retained in bore 14 in any suitable manner as by threading the bottom portion of bore 14 and the outer periphery of the plug or, as shown, by forming a circumferential groove 16.2 in housing 12 in communication with bore 14 and placing a retaining ring 16.3 in the groove. Plug 16 is formed with a recessed spring seat 16.4 and a sealing surface 16.5. Preferably plug 16 is formed of Teflon or other suitable material which forms an effective sealing surface.

A shuttle 20 formed of free cutting naval brass or other nonmagnetic material is slidably disposed in bore portion 14.1 and is formed with outer peripheral sealing surfaces 20.1 to effectively form a seal with the side wall defining bore 14.1. Fig. 1 shows a plurality of annular recesses spaced axially along shuttle 20 in the sealing surfaces 20.1 as well as in the dampening passage area to be discussed below in order to provide space for contaminants and the like which might otherwise tend to mar the surfaces if caught between the shuttle and the bore. Alternatively, the sealing surface 20.1 and passageway surfaces may be formed without such recesses if desired as shown in Fig. 1a.

A second port 12.1 is formed in the side wall defining bore 14 and extends in a radial direction through the side wall at a location spaced axially from the port 16.1 such that shuttle 20 is able to slide up and down a selected distance between the two ports. Surface 16.5 of plug 16 forms a stop for the shuttle when moving in the downward direction as see in Fig. 1 and upper stop surface 12.2 limits upward movement as seen in Fig. 1.

Shuttle 20 is itself formed with a bore 20.5 extending along its longitudinal axis essentially along its entire length but closed at its top end portion. A permanent magnet 26 is disposed at the closed end of bore 20.5 and is biased thereagainst by a coil spring 28 which extends from seat 16.4 to the magnet 26.

Shuttle 20 is provided with an extension 20.2 which may be integrally formed with the main body. Extension 20.2 serves as a piston and has a force receiving surface 20.3 at its free distal end. Force receiving surface 20.3 is formed of first and second portions 20.3 a and b. When the piston is fully seated against stop 12.2 only portion 20.3a is exposed to the high pressure oil but as soon as the piston moves away from the stop, both portions 20.3a and b are exposed to the high pressure oil to greatly increase the force tending to move the shuttle toward stop 16.5. Thus a first level of high pressure is required to move the piston away from stop 12.2 and once this happens, the increased area results in a significantly larger force being placed on the piston to move it downwardly to thereby avoid any possible chattering tendency which might occur if the pressure hovered at the calibrated level.

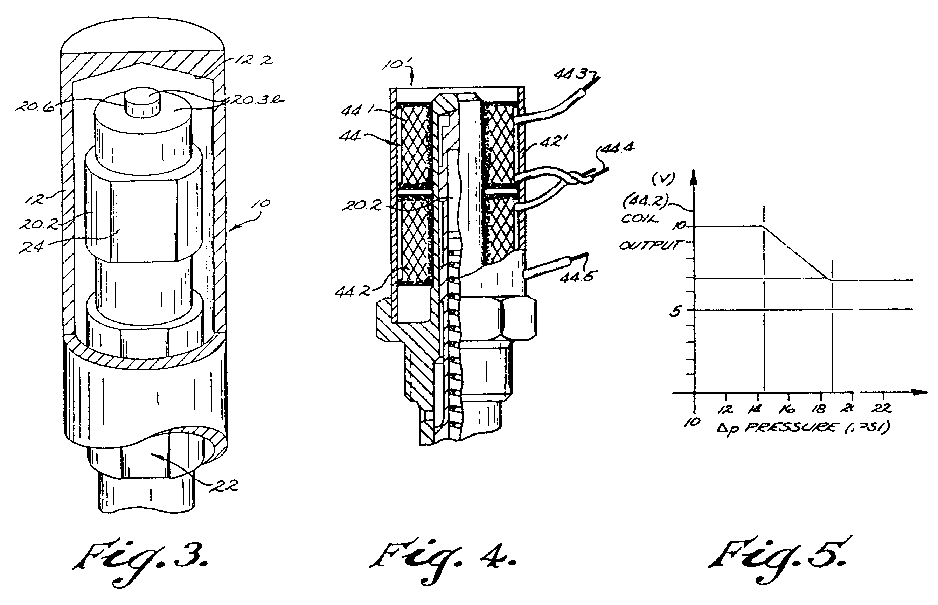

The mass of shuttle 20 in combination with the spring rate of spring 28 is selected to yield a natural frequency of less than 20 Hz which makes the sensor insensitive to the 120 Hz main frequency of differential pressure pulsation generated by the oil pump and compressor piston. To further lower the response rate of shuttle 20 to less than 1 Hz a passageway 22 having a selected length and cross sectional area is formed between force receiving surface 20.3b and the side wall of housing 12 which defines bore 14.2 which can be seen in Fig.2 as an annular space. The length of the passage and its cross sectional area as well as the ratio between area 20.3a and 20.3b determine the dampening effect that the sensor has relative to the pressure fluctuations. The configuration depicted in Fig.2 represents one degree of dampening. By way of example in a sensor constructed in accordance with the invention shuttle 20' of Fig.1a including extension 20.2 was 63.5 mm (2.50 inches) long of which extension 20.2 comprised 44.45 mm (1.75 inches). The outer diameter of the large diameter portion which comprises the major portion of the length of extension 20.2 was approximately 6.3 mm (0.2480 inch). The diameter of bore 14.2 was approximately 6.35 mm (0.2500 inch). The difference in diameters of bore 14.2 and extension 20.2 therefor resulted in a clearance of 0.254 mm (0.001 inch) for passage 22 (Fig.2). If it is desired to lessen the dampening effect the outer peripheral surface of the generally cylindrical extension can be provided with a flattened portion 20.4 extending parallel to the longitudinal axis as seen in Fig.3 thereby increasing the cross sectional area. Still less dampening is provided with a pair of flattened surfaces providing an enlarged passage 22' seen in Fig.2a or even more flattened surfaces 20.4 providing even a greater enlarged passage 22'' seen in Fig.2b.

In order for the lubrication pressure to exert its force onto force receiving surface 20.3b, the oil has to make its way through the passage into the chamber at the top end of the bore. The viscosity of the oil, the length and cross sectional area of the passage, the amount of the differential pressure and the length of motion of shuttle 20 between its stops (distance "t" shown in Fig. 1) determine the time the shuttle requires to move to the bottom stop. As the differential pressure decreases below the selected or calibrated value, the portion below that level in effect attempts to reset the shuttle to the top stop position however the oil at the top of the bore has to be displaced back through the passage thereby resulting in a very slow reset motion.

A reed switch 30 is mounted on housing 12 adjacent to the upper end of bore 14.2 and has first and second electrical contacts adapted to move into and out of engagement in response to the position of magnet 26. The position of shuttle 20 and concomitantly magnet 26 is determined by the differential in the pressure of oil between the two ports 16.1 and 12.1. When the differential is greater than the selected or calibrated value then the shuttle moves downwardly until limited by surface 16.5 which acts both as a stop and as a seal effectively closing port 16.1. This is the position of shuttle 20 during normal operation of the compressor. In that position magnet 26 would be in its lowermost position allowing the reed contacts to move to their normally closed position energizing a circuit through leads 30.1 and 30.2 indicative that normal lubrication is being provided. When the differential decreases below the calibrated level, shuttle 20 moves upwardly under the influence of the oil pressure received through port 16.1 and the bias of spring 28 until motion of the shuttle is limited by stop surface 12.2. In that position magnet 26 is in its uppermost position thereby causing the reed switch contacts to open and deenergize the circuit indicating that a low pressure condition exists and that the lubrication function is impaired.

Calibration of the sensor is dependent upon the relative force receiving areas, i.e. force receiving surface 20.3 on the high pressure side of piston 20.2 and the force receiving surfaces on the low pressure side of shuttle 20 including the bottom surface of the shuttle and the bottom surface of the closed end of bore 20.5 in addition to the force exerted by spring 28.

A sensor made in accordance with the invention employed a spring selected so that 15 psi (105 kPa) differential pressure resulted in the calibrated level. That is, if the differential is higher than 15 psi (105 kPa), the shuttle 20 is at the stop 16.5 indicative of sufficient lubrication. If oil pressure drops below 15 psi, the shuttle will move toward stop surface 12.2 indicative of low lubrication pressure.

The length of the portion of shuttle 20 having sealing surface 20.1 is such relative to the location of projection 20.6 and stop surface 12.2 that port 12.1 is always open so that oil pressure at port 12.1 is always in communication with force receiving surface 20.3 of piston 20.2.

Housing 12 is formed with a threaded portion 12.3 intermediate its ends which is adapted to screw into a threaded bore 32.1 in the housing 32 of an oil pump. A well 34 is connected to the high pressure output of the oil pump. Another bore 32.2 leads to the low pressure crankcase 36 of a refrigerator compressor with the bottom tip portion of probe 10 extending into the crankcase so that port 16.1 is in communication therewith. A suitable seal 38 seals the crankcase from well 34.

Housing 12 is provided with a hexagonal portion 12.4 to facilitate screwing in of the probe and has a bottom surface 12.5 which forms a seal with packing washer 40 compressed between surface 12.5 and housing 32. Preferably a cylindrical sleeve 42 of steel or other ferromagnetic material is mounted on the top surface of hexagonal portion 12.4 and extends upwardly beyond the reed switch to provide magnetic shielding of the switch and sensor components.

Fig. 4 shows an alternate embodiment in which an analog output indicative of the varying pressure differential can be obtained. A coil 44 has a first portion 44.1 wound about housing 12 at its top end portion with a second portion 44.2 wound about housing 12 adjacent to the first portion. An input voltage energizing lead 44.3 and intermediate tap 44.4 are coupled to a voltage source such as 20 volt, 60 Hz, 40 ma while output lead 44.5 and tap 44.4 are coupled to voltage responsive means such as a voltmeter. The upper portion of piston 20.2 is formed of magnetically high permeability material so that an output voltage will be obtained which will vary based on the position of the upper end of piston 20.2 which in turn is dependent upon the differential oil pressure as seen in Fig. 5. As in the previous embodiment, a sleeve 42' is preferably provided for magnetic shielding.

While specific embodiments of the invention have been illustrated and described herein, it is realized that numerous modifications and changes will occur to those skilled in the art. For example it is within the purview of the invention to use a Hall Effect sensor or similar device rather than reed switch 30 to provide the indication means.

**Claims**

1. Apparatus for sensing a fluid pressure differential between a first and a second port, the apparatus comprising a housing (12) having a cylindrical bore (14) extending from a first, open end to a second, closed end, a shuttle (20) slidably received in the bore and having a part (20.1) fitting the bore like a seal at the end of the shuttle nearer the first end of the bore, a pressure receiving surface and an element of magnetic material (26), means for biasing the shuttle towards the second end of the bore, and means (30,44) responsive to the element of magnetic material to provide an indication of the position of the shuttle in the bore, the first port (16.1) being connected to the first end of the bore and the second port (12.1) being connected to a middle region of the bore so that the pressure receiving surface receives the pressure at the first port on one face and the pressure at the second port on the other face (20.3b),

characterised in that the shuttle has a stepped generally cylindrical portion between the middle region opposite the second port and the pressure receiving surface, the stepped generally cylindrical portion being partly of larger cross-section so as to define part of a passage between the shuttle and the wall of the cylindrical bore for fluid to flow from the second port to the pressure receiving surface, that part of the passage having selected length and cross-section so as to provide damping of the movement of the shuttle in response to fluid pressure.

2. Apparatus according to claim 1 in which the element of magnetic material is a magnet characterised in that the responsive means includes a magnetic reed switch (30) mounted on the housing adjacent to the bore.

3. Apparatus according to claim 1 characterised in that the element of magnetic material is formed of magnetically high permeability material, the bore is defined by a cylindrical portion of the housing; and a coil (44) having an input, an output and an intermediate tap is disposed on the cylindrical portion of the housing with energizing means coupled between the input and the tap and output sensing means coupled between the output and tap.

4. Apparatus according to any one of the preceding claims characterised in that the first port (16.1) is aligned with the longitudinal axis.

5. Apparatus according to claim 4 characterised by a first stop (16) formed at the first end of the bore to limit travel of the shuttle in the direction toward the first end of the bore.

6. Apparatus according to claim 5 characterised in that the first stop (16) forms a sealing surface and the shuttle has a first end surface engageable with the sealing surface to close the first port.

7. Apparatus according to claim 5 or claim 6 characterised by a second stop (20.6) formed at the second end of the bore to limit travel of the shuttle in the direction toward the second end of the bore.

8. Apparatus according to claim 1 characterised in that the part of larger cross-section has one or more flat surfaces (20.4) on its outer periphery to provide the selected degree of damping.

9. Apparatus according to any one of the preceding claims characterised in that the shuttle has a second pressure receiving surface (20,3a) in communication with the second port (12.1) adapted to place a force on the shuttle tending to move the shuttle towards the first end of the bore, a stop (20.6) is formed in the bore limiting movement of the shuttle towards the second end effective to isolate the other face of the first mentioned pressure receiving surface (20.3b) from the second port when the shuttle is in physical contact with the stop whereby the force placed on the shuttle to move it toward the first end of the bore increases upon movement of the shuttle away from the stop.

**Patentansprüche**

1. Vorrichtung zum Erfassen einer Fluiddruckdifferenz zwischen einer ersten und einer zweiten Öffnung, mit einem Gehäuse (12) mit einer zylindrischen Bohrung (14), die sich von einem ersten, offenen Ende zu einem zweiten, geschlossenen Ende erstreckt, einem Ventilkegel (20), der in der Bohrung verschiebbar aufgenommen ist und einen Teil (20.1) aufweist, der an dem Ende des Ventilkegels, das näher bei dem ersten Ende der Bohrung liegt, wie eine Dichtung in die Bohrung paßt, einer Druckaufnahmefläche und einem Element aus magnetischem Material (26), Mitteln zum Vorspannen des Ventilkegels in Richtung auf das zweite Ende der Bohrung, sowie Mitteln (30, 44), die auf das Element aus magnetischem Material ansprechen, um eine Angabe über die Position des Ventilkegels in der Bohrung zu liefern, wobei die erste Öffnung (16.1) mit dem ersten Ende der Bohrung, und die zweite Öffnung (12.1) mit einem Mittelbereich der Bohrung verbunden ist, so daß die Druckaufnahmefläche den Druck an der ersten Öffnung an einer Seite und den Druck an der zweiten Öffnung an der anderen Seite (20.3b) aufnimmt,

dadurch gekennzeichnet, daß der Ventilkegel zwischen dem Mittelbereich gegenüber der zweiten Öffnung und der Druckaufnahmefläche einen abgestuften, allgemein zylindrischen Abschnitt mit einem teilweise größeren Querschnitt aufweist, so daß zwischen dem Ventilkegel und der Wand der zylindrischen Bohrung der Teil eines Durchgangs gebildet wird, damit Fluid von der zweiten Öffnung zu der Druckaufnahmefläche fließen kann, wobei jener Teil des Durchgangs eine ausgewählte Länge und einen ausgewählten Querschnitt aufweist, so daß in Reaktion auf den Fluiddruck eine Dämpfung der Bewegung des Ventilkegels erhalten wird.

2. Vorrichtung nach Anspruch 1, bei welcher das Element aus magnetischem Material ein Magnet ist, dadurch gekennzeichnet, daß die ansprechenden Mittel einen magnetischen Reedschalter (30) umfassen, der an dem an die Bohrung angrenzenden Gehäuse angebracht ist.

3. Vorrichtung nach Anspruch 1, dadurch gekennzeichnet, daß das Element aus magnetischem Material aus einem Material mit hoher magnetischer Permeabilität gebildet ist, die Bohrung durch einen zylindrischen Abschnitt des Gehäuses gebildet ist, sowie daß eine Spule (44) mit einem Eingangs-, Ausgangs- und einem zwischenabgriff an dem zylindrischen Abschnitt des Gehäuses angeordnet ist, wobei Erregermittel zwischen den Eingang und den Abgriff gekoppelt sind, und Ausgangserfassungsmittel zwischen den Ausgang und den Abgriff gekoppelt sind.

4. Vorrichtung nach einem der vorhergehenden Ansprüche, dadurch gekennzeichnet, daß die erste Öffnung (16.1) mit der Längsachse fluchtend ausgerichtet ist.

5. Vorrichtung nach Anspruch 4, gekennzeichnet durch einen ersten Anschlag (16), der an dem ersten Ende der Bohrung ausgebildet ist, um die Bewegung des Ventilkegels in Richtung auf das erste Ende der Bohrung zu begrenzen.

6. Vorrichtung nach Anspruch 5, dadurch gekennzeichnet, daß der erste Anschlag (16) eine Dichtfläche bildet und der Ventilkegel eine erste Endfläche aufweist, die zum Schließen der ersten Öffnung mit der Dichtfläche in Eingriff gebracht werden kann.

7. Vorrichtung nach Anspruch S oder Anspruch 6, gekennzeichnet durch einen zweiten Anschlag (20.6), der an dem zweiten Ende der Bohrung ausgebildet ist, um die Bewegung des Ventilkegels in Richtung auf das zweite Ende der Bohrung zu begrenzen.

8. Vorrichtung nach Anspruch 1, dadurch gekennzeichnet, daß der Teil mit dem größeren Querschnitt an seinem Umfang eine oder mehrere Anflachungen (20.4) aufweist, um den gewählten Grad an Dämpfung zu erreichen.

9. Vorrichtung nach einem der vorhergehenden Ansprüche, dadurch gekennzeichnet, daß der Ventilkegel eine zweite Druckaufnahmefläche (20.3a) in Verbindung mit der zweiten Öffnung (12.1) aufweist, die eine Kraft auf den Ventilkegel aufbringen kann, die dazu neigt, den Ventilkegel auf das erste Ende der Bohrung zuzubewegen, daß ein Anschlag (20.6) in der Bohrung ausgebildet ist, der die Bewegung des Ventilkegels auf das zweite Ende zu begrenzt und bewirkt, daß die andere Seite der zuerst erwähnten Druckaufnahmefläche (20.3b) von der zweiten Offnung isoliert ist, wenn sich der Ventilkegel in physischem Kontakt mit dem Anschlag befindet, wodurch sich die Kraft, die auf den Ventilkegel aufgebracht wird, um ihn auf das erste Ende der Bohrung zuzubewegen, bei der Bewegung des Ventilkegels von dem Anschlag weg erhöht.

**Revendications**

1. Appareil permettant de détecter une différence de pression de fluide existant entre un premièr et un deuxième orifice, l'appareil comprenant un carter (12) ayant un alésage cylindrique (14) s'étendant depuis une première extrémité ouverte vers une deuxième extrémité borgne, une navette (20) reçue de façon coulissante dans l'alésage, comprenant une première partie (20.1) s'ajustant dans l'alésage comme un joint d'étanchéité, située à l'extrémité de la navette qui est la plus près de la première extrémité de l'alésage, une surface réceptrice de la pression, et un élément en matériau magnétique (26), et l'appareil comprenant des moyens pour solliciter la navette vers la deuxième extrémité de l'alésage, et des moyens (30, 44) qui réagissent à l'élément en matériau magnétique de manière à fournir une indication de la position de la navette dans l'alésage, le premier orifice (16.1) étant relié à la première extrémité de l'alésage et le deuxième orifice (12.1) étant relié à une zone médiane de l'alésage, de telle façon que la surface réceptrice de pression reçoive sur une face la pression régnant au premier orifice et sur l'autre face (20.3b) la pression régnant au deuxième orifice, caractérisé en ce que la navette comporte une partie étagée généralement cylindrique comprise entre la zone médiane opposée au deuxième orifice et la surface réceptrice de pression, la partie étagée généralement cylindrique présentant partiellement une section transversale plus grande, de façon à définir une partie d'un passage entre la navette et la paroi de l'alésage cylindrique pour permettre au fluide de s'écouler du deuxième orifice vers la surface réceptrice de pression, cette partie du passage présentant une longueur et une section transversale déterminées de manière à assurer un amortissement des mouvements de la navette soumise à la pression du fluide.

2. Appareil selon la revendication 1, dans lequel l'élément en matériau magnétique est un aimant, caractérisé en ce que les moyens sensibles comportent un commutateur magnétique Reed (30) qui est monté sur le carter de façon adjacente à l'alésage.

3. Appareil selon la revendication 1, caractérisé en ce que l'élément en matériau magnétique est réalisé en un matériau à forte perméabilité magnétique, en ce que l'alésage est défini par une partie cylindrique du carter ; et en ce qu'une bobine (44) comprenant une entrée, une sortie et une broche intermédiaire est disposée sur la partie cylindrique du carter, des moyens de mise sous tension étant raccordés entre l'entrée et la broche intermédiaire, et des moyens de détection de sortie étant raccordés entre la sortie et la broche intermédiaire.

4. Appareil selon l'une quelconque des revendications précédentes, caractérisé en ce que le premier orifice (16.1) est aligné sur l'axe longitudinal.

5. Appareil selon la revendication 4, caractéris par une première butée (16) formée à la première extrémité de l'alésage, destinée à limiter la course de la navette vers la première extrémité de l'alésage.

6. Appareil selon la revendication 5, caractérisé en ce que la première butée (16) forme une surface d'étanchéité, et en ce que la navette comporte une première surface d'extrémité pouvant s'engager sur la surface d'étanchéité de manière à obturer le premier orifice.

7. Appareil selon la revendication 5 ou la revendication 6, caractérisé par une butée (20.6) formée au niveau de la deuxième extrémité de l'alésage, destinée à limiter la course de la navette en direction de la deuxième extrémité de l'alésage.

8. Appareil selon la revendication 1, caractérisé en ce que la partie qui présente la plus grande section transversale comporte une ou plusieurs surfaces de méplat (20.4) à sa périphérie extérieure, de manière à assurer le degré d'amortissement déterminé.

9. Appareil selon l'une quelconque des revendications précédentes, caractérisé en ce que la navette comporte une deuxième surface (20.3a) réceptrice de la pression, qui communique avec le deuxième orifice (12.1) et est adaptée pour appliquer une force sur la navette, tendant à déplacer la navette vers la première extrémité de l'alésage, en ce qu'une butée (20:6) est formée dans l'alésage, qui limite le mouvement de la navette en direction de la deuxième extrémité et a pour effet d'isoler l'autre face de ladite première surface (20.3b) réceptrice de la pression par rapport au deuxième orifice lorsque la navette est en contact physique avec la butée, ce qui fait que la force agissant sur la navette de manière à la déplacer vers la première extrémité de l'alésage augmente dès que la navette s'éloigne de la butée.

Fig.1.    Fig.1a.

Fig.2.    Fig.2a.    Fig.2b.

Fig. 3.

Fig. 4.

Fig. 5.